(19) Europäisches Patentamt / European Patent Office / Office européen des brevets

(11) **EP 2 785 785 B1**

(12) **EUROPEAN PATENT SPECIFICATION**

(45) Date of publication and mention of the grant of the patent:
**03.02.2016 Bulletin 2016/05**

(51) Int Cl.:
**C08L 23/06** $^{(2006.01)}$     **F16L 9/12** $^{(2006.01)}$

(21) Application number: **12791105.5**

(86) International application number:
**PCT/EP2012/004862**

(22) Date of filing: **23.11.2012**

(87) International publication number:
**WO 2013/079180 (06.06.2013 Gazette 2013/23)**

(54) **MULTIMODAL POLYETHYLENE COMPOSITION FOR THE PRODUCTION OF PIPES WITH IMPROVED SLOW CRACK GROWTH RESISTANCE**

MULTIMODALE POLYETHYLENZUSAMMENSETZUNG ZUR HERSTELLUNG VON ROHREN MIT VERBESSERTER BESTÄNDIGKEIT GEGENÜBER LANGSAMEM RISSWACHSTUM

COMPOSITION DE POLYÉTHYLÈNE MULTIMODALE POUR LA PRODUCTION DE TUYAUX PRÉSENTANT UNE RÉSISTANCE À LA PROPAGATION LENTE DE FISSURES AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2011 EP 11009527**

(43) Date of publication of application:
**08.10.2014 Bulletin 2014/41**

(73) Proprietor: **Borealis AG**
**1220 Vienna (AT)**

(72) Inventors:
• **BURYAK, Andrey**
**A-4020 Linz (AT)**
• **ERIKSSON, Virginie**
**SE-44441 Stenungsund (SE)**
• **PALMLÖF, Magnus**
**S-426 71 Västra Frölunda (SE)**
• **NYMARK, Anders**
**FI-06100 Porvoo (FI)**
• **BÄCKMAN, Mats**
**deceased (SE)**

(74) Representative: **Kador & Partner**
**Corneliusstraße 15**
**80469 München (DE)**

(56) References cited:
**EP-A1- 1 041 113     EP-A1- 1 460 105**
**WO-A1-03/085044     US-B1- 6 770 341**

**Description**

The present application relates to a polyethylene composition with a density of the base resin of more than 950 kg/m$^3$ suitable for pipe applications which shows improved slow crack growth resistance, a process for producing such a polyethylene composition in a multistage process, an article, such as a pipe, made thereof and the use of the polyethylene composition for the production of such an article.

Pipes constructed from polymer materials have a multitude of uses, such as fluid transport, i.e. the transport of liquids and gases, e.g. water or natural gas. During transport, it is normal for the fluid to be pressurized. Moreover, the transported fluid may have varying temperatures, usually within the range from about 0°C to about 50°C. Such pressurized pipes are preferably constructed from polyolefin plastics, usually unimodal or bimodal ethylene plastics such as medium density polyethylene (MDPE; density: 930-942 kg/m$^3$) and high density polyethylene (HDPE; density: 942-965 kg/m$^3$).

The expression "pressure pipe" used herein refers to a pipe which, when used, is subjected to a positive pressure, that is the pressure inside the pipe being higher than the pressure outside the pipe.

Polymeric pipes are generally manufactured by extrusion, or, to a small extent, by injection moulding. A conventional plant for extrusion of polymer pipes comprises an extruder, a die-head, a calibrating device, cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

EP 0 739 937 discloses a pipe having improved properties. The pipe is made of a bimodal polyethylene resin, and has specified stress cracking resistance, impact strength and stiffness. The publication discloses that the material should have an MFR$_5$ not being higher than 0.35 g/10 min.

EP 1 920 179 discloses a multimodal polyethylene composition comprising three polyethylene fractions with different molecular weight which is suitable for the production of pipes with good mechanical properties in regard of environmental stress crack resistance, long term mechanical strength and processing behavior.

Whilst properties of conventional polymer pipes are sufficient for many purposes, enhanced properties may also be desired, for instance in applications requiring high pressure resistance, i.e. pipes that are subjected to an internal fluid pressure for long and/or short periods of time.

According to ISO 9080 polyethylene pipes are classified by their minimum required strength, i.e. their capability to withstand different hoop stresses during 50 years at 20°C without fracturing. Thereby, pipes withstanding a hoop stress of 8.0 MPa (MRS8.0) are classified as PE80 pipes, and pipes withstanding a hoop stress of 10.0 MPa (MRS10.0) are classified as PE100 pipes. The next evolutionary step in polyethylene pipe development will be PE125 pipes withstanding a hoop stress of 12.5 MPa (MRS12.5). To meet the PE80 requirements with multimodal resins manufactured by conventional Ziegler-Natta catalyst the density needs to be at least 940 kg/m$^3$ and to meet PE100 requirements the density needs to be above 945 kg/m$^3$. However, the density of a polyethylene resin is directly connected with its crystallinity. The higher the crystallinity of a polyethylene resin the lower its slow crack growth resistance.

US 6,770,341 and EP 1 460 105 disclose bimodal polyethylene compositions for the production of pipes meeting the PE125 requirements which due to the high density of the base resin show inferior slow crack growth resistance.

There is still a need for polyethylene compositions having a base resin with a high density for the production of pipes which show improved slow crack growth resistance.

The present invention therefore relates to a polyethylene composition comprising a base resin having a density of more than 950 kg/m$^3$ and equal to or less than 965 kg/m$^3$, determined according to ISO 1183-1:2004, and wherein the composition has a melt flow rate MFR$_5$ (190°C, 5 kg) of equal to or less than 0.1 g/10 min, determined according to ISO 1133 and a polydispersity index PI within the range of equal to or higher than 3.0 Pa$^{-1}$ and equal to or less than 4.5 Pa$^{-1}$.

It has surprisingly been found that by selecting the polydispersity index within the narrow range of 3.0 to 4.5 Pa$^{-1}$ and a low melt flow rate MFR$_5$ of equal or less than 0.1 g/10 min, a polyethylene composition having a base resin with a density of more than 950 kg/m$^3$ shows improved slow crack growth resistance e.g. in the Notched Pipe Test according to ISO 13479-2009 at a pressure of 11.2 bar.

Usually, a polyethylene composition comprising at least two polyethylene fractions, which have been produced under different polymerisation conditions resulting in different (weight average) molecular weights and/or different comonomer contents for the fractions, is referred to as "multimodal". The prefix "multi" relates to the number of different polymer fractions of the composition consisting of. Thus, for example, a composition consisting of two fractions only is called "bimodal", whereas a composition consisting of three fractions only is called "trimodal".

Thereby the term "different" means that the polyethylene fractions differ from each other in at least one property, preferably in the weight average molecular weight or comonomer content or both.

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

Preferably, the polyethylene composition according to the inventive process is a multimodal polyethylene composition, more preferably a trimodal polyethylene composition.

The density of the base resin is preferably equal to or higher than 950.5 kg/m$^3$, more preferably equal to or higher than 951.0 kg/m$^3$, most preferably equal to or higher than 952.0 kg/m$^3$. The upper limit of the density of the base resin is preferably equal to or less than 960.0 kg/m$^3$, more preferably equal to or higher than 956.0 kg/m$^3$ and most preferably equal to or higher than 954.0 kg/m$^3$.

The term "base resin" means the entirety of polymeric components in the polyethylene composition according to the invention, usually making up at least 90 wt% of the total composition.

The polyethylene composition of the present invention preferably has a melt flow rate $MFR_5$ of equal to or less than 0.09 g/10 min, more preferably of equal to or less than 0.08 g/10 min and most preferably of equal to or less than 0.07 g/10 min. The lower limit of the melt flow rate $MFR_5$ is preferably equal to or higher than 0.01 g/10 min, more preferably of equal to or higher than 0.02 g/10 min and most preferably of equal to or higher than 0.03 g/10 min.

The polyethylene composition of the present invention preferably has a melt flow rate $MFR_{21}$ of equal to or less than 7.0 g/10 min, more preferably of equal to or less than 6.0 g/10 min and most preferably of equal to or less than 5.5 g/10 min. The lower limit of the melt flow rate $MFR_{21}$ is preferably equal to or higher than 3.5 g/10 min, more preferably of equal to or higher than 4.0 g/10 min and most preferably of equal to or higher than 4.5 g/10 min.

Further, the polyethylene composition preferably has a flow rate ratio $FRR_{21/5}$ being the ratio of $MFR_{21}/MFR_5$ of 50 or more, more preferably 60 or more and most preferably of 75 or more.

The flow rate ratio $FRR_{21/5}$ is preferably 100 or less, more preferably 95 or less and most preferably of 90 or less.

The polyethylene composition according to the present invention has a rather narrow molecular weight distribution which can be seen by its polydispersity index PI being within the range of equal to or higher than 3.0 Pa$^{-1}$ and equal to or less than 4.5 Pa$^{-1}$.

Preferably, the PI is equal to or higher than 3.2 Pa$^{-1}$, more preferably equal to or higher than 3.5 Pa$^{-1}$, and most preferably equal to or higher than 3.7 Pa$^{-1}$ and equal to or less than 4.3 Pa$^{-1}$, more preferably equal to or less than 4.1 Pa$^{-1}$, and most preferably equal to or less than 4.0 Pa$^{-1}$.

This rather narrow molecular weight distribution can also be seen from the ratio of the weight average molecular weight and the number average molecular weight $M_w/M_n$ and from the ratio of the z average molecular weight and the weight average molecular weight $M_z/M_w$ of the polyethylene composition according to the present invention.

The composition preferably has a $M_w/M_n$ of equal to or less than 60, more preferably of equal to or less than 55, and most preferably of equal to or less than 50. The lower limit of the $M_w/M_n$ is preferably equal to or higher than 30, more preferably equal to or higher than 40.

Further, the composition preferably has a $M_z/M_w$ of equal to or less than 7.0, more preferably of equal to or less than 6.5, and most preferably of equal to or less than 6.0. The lower limit of the $M_z/M_w$ is preferably equal to or higher than 3.0, more preferably equal to or higher than 4.0.

The weight average molecular weight $M_w$ of the polyethylene composition is preferably equal to or higher than 200,000 g/mol, more preferably equal to or higher than 250,000 g/mol, most preferably equal to or higher than 300,000 g/mol, and preferably equal to or less than 400,000 g/mol, more preferably equal to or less than 370,000 g/mol, still more preferably equal to or less than 345,000 g/mol, most preferably equal to or less than 330,000 g/mol.

The z average molecular weight $M_z$ of the polyethylene composition is preferably equal to or higher than 900,000 g/mol, more preferably equal to or higher than 1,100,000 g/mol, most preferably equal to or higher than 1,500,000 g/mol, preferably equal to or less than 3,000,000 g/mol, more preferably equal to or less than 2,700,000 g/mol, still more preferably equal to or less than 2,300,000 g/mol, and most preferably equal to or less than 2,000,000 g/mol.

The number average molecular weight $M_n$ of the polyethylene composition is preferably equal to or higher than 5,000 g/mol, more preferably equal to or higher than 5,500 g/mol, still more preferably equal to or higher than 6,000 g/mol, most preferably equal to or higher than 6,500 g/mol, and preferably equal to or less than 10,000 g/mol, more preferably equal to or less than 8,000 g/mol, most preferably equal to or less than 7,000 g/mol.

The polyethylene composition according to the invention preferably has a complex viscosity at 0.05 rad/s eta*$_{0.05 rad/s}$ of 350 to 450 kPa·s, more preferably of 370 to 430 kPa·s and most preferably 390 to 415 kPa·s.

Further, the polyethylene composition according to the invention preferably has a complex viscosity at 300 rad/s eta*$_{300 rad/s}$ of 850 to 1500 kPa·s, more preferably of 950 to 1400 kPa·s and most preferably 1200 to 1350 kPa·s.

The composition preferably has a loss tangent $tan_{0.05}$, being the ratio of the loss modulus (G") and the storage modulus (G') at a frequency of 0.05 rad/s, of 1.0 to 1.4, more preferably from 1.1 to 1.3.

Further, the composition preferably has a loss tangent $tan_{300}$, being the ratio of the loss modulus (G") and the storage modulus (G') at a frequency of 300 rad/s, of 0.1 to 0.5, more preferably from 0.2 to 0.4.

The elasticity balance $tan_{0.05}/tan_{300}$ of the composition, being the ratio of the loss tangent $tan_{0.05}$ and the loss

tangent $\tan_{300}$, is preferably at least 2.5, more preferably at least 3.0, most preferably at least 3.4. The upper limit of the elasticity balance $\tan_{0.05}/\tan_{300}$ is usually not higher than 10.

As described above, the final polyethylene compositions according to the present invention preferably are multimodal polyethylene compositions, more preferably trimodal compositions.

The base resin of the polyethylene composition preferably comprises more than two different ethylene homo- or copolymer fractions, more preferably three or more ethylene homo- or copolymer fractions (A), (B) and (C).

The term "different" thereby means that the fractions differ in at least one property, such as weight average molecular weight or comonomer content.

Preferably, the three or more ethylene homo- or copolymer fractions (A), (B) and (C) are different in their weight average molecular weight $M_w$.

It is preferred that fraction (A) has the lowest weight average molecular weight $M_w$ of all fractions (A), (B) and (C).

It is further preferred that fraction (C) has the highest average molecular weight $M_w$ of all fractions (A), (B) and (C).

It is still further preferred that the average molecular weight $M_w$ of fraction (B) is higher than that of fraction (A) but lower than that of fraction (C).

It is preferred that the fractions (A), (B) and (C) are polymerized at different stages of a multistage process.

The average molecular weight $M_w$ of a fraction can be estimated from the hydrogen input into the different stages of a multistage process. Hydrogen in polymerization processes usually reacts as chain transfer agent. Thus, the higher the hydrogen input the shorter the polymer chains and the lower the average molecular weight $M_w$.

Preferably, the base resin is consisting of fractions (A), (B) and (C), optionally further comprising a prepolymer fraction in an amount of up to 20 wt%, more preferably up to 10 wt%, and most preferably up to 5 wt% of the total base resin.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

It is preferred that at least two of the fractions (A), (B) and (C) are ethylene copolymers.

An ethylene copolymer in this regard denotes a polymer comprising at least 50 wt% of ethylene monomer units.

Preferably, the fractions (A), (B) and (C) differ in their comonomer content.

Fraction (A) may be an ethylene homopolymer or the ethylene copolymer with the lowest comonomer content of the three fractions (A), (B) and (C). It is preferred that fraction (A) is an ethylene homopolymer.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

Fraction (A) further preferably has a melt flow rate $MFR_2$ of at least 50 g/10 min, more preferably at least 75 g/10 min, and most preferably at least 100 g/10 min.

The upper limit of the melt flow rate $MFR_2$ of fraction (A) is preferably 450 g/10 min, more preferably 400 g/10 min, still more preferably 350 g/10 min and most preferably 300 g/10 min.

The $MFR_2$ of fraction (A) can be directly determined in the case fraction (A) is polymerized separately or as first fraction of the inventive composition. In the case fraction (A) is polymerized as the second or third fraction of the inventive composition the $MFR_2$ of fraction (A) can be calculated according to the equation developed by Hagström and coworkers in B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13. Thereby, fractions (B) and (C) of the inventive composition will be treated as second fraction.

Fraction (A) is preferably present in the composition in an amount of at least 45 wt%, more preferably at least 50 wt% and most preferably at least 55 wt%.

Fraction (A) is preferably present in the composition in an amount of not more than 75 wt%, more preferably not more than 70 wt% and most preferably not more than 65 wt%.

Fraction (A) preferably has a density of 970 kg/m$^3$ or more.

It is preferred that fractions (B) and (C) are copolymers of ethylene and at least one alpha-olefin comonomer. The alpha-olefin conomomer preferably is selected from alpha-olefin conomomers with 3 to 12 carbon atoms, more preferably 4 to 8 carbon atoms. Suitable alpha-olefin comonomer species are 1-butene, 1-hexene and 1-octene. 1-hexene is mostly preferred.

Fractions (B) and (C), and optionally fraction (A) can include the same or different alpha-olefin comonomers.

It is thereby preferred that all comonomer fractions include the same alpha-olefin comonomer(s).

Preferably, fraction (B) has a higher comonomer content as fraction (C).

Fraction (B) preferably has a comonomer content of more than 0.1 mol%, more preferably more than 0.3 mol%, most preferably more than 0.5 mol%.

Fraction (B) preferably has a comonomer content of below 2.0 mol%, more preferably below 1.5 mol%, most preferably below 1.0 mol%.

Fraction (C) preferably has a comonomer content of more than 0.05 mol%, more preferably more than 0.1 mol%, most preferably more than 0.3 mol%.

Fraction (C) preferably has a comonomer content of below 1.5 mol%, more preferably below 1.0 mol%, most preferably below 0.8 mol%.

In one embodiment fraction (A) denotes a copolymer of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. Thereby, 1-hexene is mostly preferred.

In this embodiment fraction (A) preferably has the lowest comonomer content. The comonomer content of fraction (A) thereby is preferably below 0.6 mol%, more preferably below 0.4 mol%, most preferably below 0.3 mol%.

Fraction (B) is preferably present in the base resin in an amount of at least 10 wt%, more preferably at least 15 wt%, most preferably at least 18 wt%. Fraction (B) is preferably present in the base resin in an amount of not more than 35 wt%, more preferably not more than 30 wt% and most preferably not more than 25 wt%.

Fraction (C) is preferably present in the base resin in an amount of at least 10 wt%, more preferably at least 15 wt%, most preferably at least 18 wt%.

Fraction (C) is preferably present in the base resin in an amount of not more than 35 wt%, more preferably not more than 30 wt% and most preferably not more than 25 wt%.

Preferably, the weight ratios of fractions (A) : (B) and (C) is 45 : 55 to 75 : 25, more preferably 55 : 45 to 65 : 35.

The weight ratios of fractions (B) : (C) is preferably 40 : 60 to 60 : 40, more preferably 45 : 55 to 55 : 45.

The invention is further related to a process for the production of a polyethylene composition according to any of the above described embodiments wherein the base resin is produced in a multi-stage process.

Preferably, the base resin comprises more than two different ethylene homo- or copolymer fractions, more preferably three or more ethylene homo- or copolymer fractions (A), (B) and (C) as described above.

Optionally, the base resin further comprises a prepolymer fraction as described above.

A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the fractions (A), (B) and (C) are polymerized at different stages of the multi-stage process in any order. It is preferred that the fractions (A), (B) and (C) are polymerized in subsequent stages.

It is preferred that the base resin of the polyethylene composition according to the invention is polymerized in at least one slurry phase reactor and at least one gas phase reactor.

In a preferred embodiment fraction (A) is polymerized in a slurry phase reactor, preferably a loop reactor, and fractions (B) and (C) are polymerized in gas phase reactors in any order.

In any order denotes that there is no preferred order in which the subsequent polymerization stages of the multi-stage process are arranged.

In one preferred embodiment of the process according to the invention, fraction (A) is polymerized in the first reaction stage.

It is thereby preferred that fraction (B) is polymerized in the second reaction stage in the presence of fraction (A).

Fraction (C) is preferably polymerized in the third reaction stage in the presence of fractions (A) and (B).

Preferably, the multistage process consists of a reaction stage conducted in a slurry phase reactor followed by two reaction stages conducted in gas phase reactors. Optionally, the reaction stage conducted in the slurry phase reactor is thereby preceded by a prepolymerization stage.

It is preferred that fraction (A) is polymerized in a slurry phase reactor.

In slurry phase polymerisation the polymer particles formed in the polymerisation together with the catalyst fragmented and dispersed within the particles, are suspended in fluid hydrocarbon. The slurry phase is agitated to enable the transfer of reactants from the fluid into the particles.

The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps.

The ethylene content in the fluid phase of the slurry in the slurry phase reactor may be from 0.5 to 50 % by mole, preferably from 1 to 20 % by mole, and in particular from 2 to 10 % by mole. The benefit of having a high ethylene concentration is that the productivity of the catalyst is increased but the drawback is that more ethylene then needs to be recycled than if the concentration was lower.

The temperature in the slurry phase polymerisation is typically from 50 to 115 °C, preferably from 60 to 110 °C and in particular from 70 to 100 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerisation above the critical temperature and pressure of the fluid mixture. Such operations are described in US-A-5,391,654. In such an operation the temperature is typically at least 85°C, preferably at least 90°C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

For adjusting the $MFR_2$ of the polyethylene fraction polymerised in the slurry phase reactor preferably hydrogen is introduced into the reactor. The hydrogen feed is preferably adjusted to the ethylene feed in order to fulfil a hydrogen to ethylene ratio in the slurry phase reactor of 250 to 1000 mol/kmol, more preferably of 500 to 800 mol/kmol.

The polyethylene fraction produced in the slurry phase reactor can be an ethylene homo- or copolymer fraction. If polymerising a copolymer, comonomers preferably are selected from the group comprising 1-butene, 1-hexene, 4-methyl-1-pentene, 1-octene or their mixtures, especially preferred is 1-hexene. In a preferred embodiment in the slurry phase reactor an ethylene homopolymer is polymerised so that no comonomer is fed to this reaction stage.

The residence time and the polymerisation temperature in the slurry phase reactor are adjusted as such as to polymerise an ethylene homo- or copolymer fraction typically in an amount of at least 45 wt%, more preferably at least 50 wt% and most preferably at least 55 wt% and not more than 75 wt%, more preferably not more than 70 wt% and most preferably not more than 65 wt%.

The polymer fraction produced in the slurry phase reactor preferably is transferred to at least one gas phase reactor.

In a fluidised bed gas phase reactor an olefin is polymerised in the presence of a polymerisation catalyst in an upwards moving gas stream. The reactor typically contains a fluidised bed comprising the growing polymer particles containing the active catalyst located above a fluidisation grid.

The polymer bed is fluidised with the help of a fluidisation gas comprising the olefin monomer, eventually comonomer(s), eventually chain growth controllers or chain transfer agents, such as hydrogen, and eventually inert gas.

The inert gas can thereby be the same or different as the inert gas used in the slurry phase reactor. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e. g. US-A-4,933,149 and EP-A-684 871.

From the inlet chamber the gas flow is passed upwards through the fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087261. Other types of fluidisation grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidisation gas passes through the fluidised bed. The superficial velocity of the fluidisation gas must be higher than the minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practice. An overview is given, amongst others, in Geldart: Gas Fluidisation Technology, J. Wiley & Sons, 1996.

When the fluidisation gas is contacted with the bed containing the active catalyst the reactive components of the gas, such as monomers and chain transfer agents, react in the presence of the catalyst to produce the polymer product. At the same time the gas is heated by the reaction heat.

The unreacted fluidisation gas is then removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

After that the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporisation heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerisable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The reactor may include a mechanical agitator to further facilitate mixing within the fluidised bed. An example of suitable agitator design is given in EP-A-707 513.

In a preferred embodiment the multi-stage process according to the invention comprises two gas phase reactors which are connected in series. The two gas phase reactors preferably succeed one slurry phase reactor.

It is preferred that in the first gas phase reactor fraction (B) of the polyethylene composition according to the invention is polymerized.

The temperature in the gas phase polymerisation in the first gas phase reactor typically is at least 70°C, preferably at least 80°C. The temperature typically is not more than 105°C, preferably not more than 95°C. The pressure is typically at least 10 bar, preferably at least 15 bar but typically not more than 30 bar, preferably not more than 25 bar.

In the first gas phase reactor the polymerisation conditions are selected as such that the polyethylene resin emerging from the first gas phase reactor, preferably consisting of fractions (A) and (B), optionally together with a prepolymer fraction, preferably has a MFR$_5$ of 20 to 60 g/10 min, more preferably 30 to 50 g/10 min, most preferably 35 to 45 g/10 min.

Further, the polyethylene resin emerging from the first gas phase reactor, preferably consisting of fractions (A) and (B), optionally together with a prepolymer fraction, preferably has a density of 950 to 968 kg/m$^3$, more preferably 955 to 967 kg/m$^3$ and most preferably 960 to 965 kg/m$^3$.

For adjusting the melt flow rate of the polyethylene fraction polymerised in the first gas phase reactor hydrogen may be introduced into the reactor. The hydrogen feed is preferably adjusted to the ethylene feed in order to fulfil a hydrogen to ethylene ratio in the first gas phase reactor of 50 to 450 mol/kmol, more preferably of 75 to 400 mol/kmol.

In the first gas phase reactor preferably an ethylene copolymer fraction is produced. The fluidisation gas stream thus comprises comonomers preferably selected from the group consisting of alpha-olefin conomoners with 3 to 12 carbon atoms, more preferably 4 to 8 carbon atoms. Suitable alpha-olefin comonomer species are 1-butene, 1-hexene and 1-octene. 1-hexene is mostly preferred. The comonomer used in the first gas phase reactor may be the same or different to that used in the slurry phase reactor. The comonomer feed is preferably adjusted to the ethylene feed in order to fulfil a comonomer to ethylene ratio of at least 1 to 20 mol/kmol, more preferably 3 to 15 mol/kmol, most preferably 5 to 10 mol/kmol.

The residence time and the polymerisation temperature in the first gas phase reactor are adjusted as such as to polymerise an ethylene copolymer fraction typically in an amount of 10 to 35 wt%, preferably 15 to 30 wt% and most preferably 18 to 25 wt% of the total polyethylene resin.

The polymer fraction produced in the first gas phase reactor preferably is transferred to a second gas phase reactor.

It is preferred that in the second gas phase reactor fraction (C) of the polyethylene composition according to the invention is polymerized.

The temperature in the gas phase polymerisation in the second gas phase reactor typically is at least 70°C, preferably at least 80°C. The temperature typically is not more than 105°C, preferably not more than 95°C. The pressure is typically at least 10 bar, preferably at least 15 bar but typically not more than 30 bar, preferably not more than 25 bar.

In the second gas phase reactor the polymerisation conditions are selected as such that the final polyethylene base resin emerging from the second gas phase reactor, preferably consisting of fractions (A), (B) and (C), optionally together with a prepolymer fraction, preferably has a MFR$_5$ of 0.01 to 0.1 g/10 min, more preferably 0.02 to 0.09 g/10 min, most preferably 0.03 to 0.08 g/10 min.

Further, the final polyethylene base resin emerging from the second gas phase reactor, preferably consisting of fractions (A), (B) and (C), optionally together with a prepolymer fraction, preferably has a density of more than 950 kg/m$^3$ and equal or less than 965.0 kg/m$^3$, more preferably 950.5 to 960.0 kg/m$^3$, still more preferably 951.0 to 956.0 kg/m$^3$ and most preferably 952.0 to 954.0 kg/m$^3$.

Preferably the density of the polymer resin consisting of fractions (A) and (B), optionally together with a prepolymer fraction, is higher than that of the base resin consisting of fractions (A), (B) and (C), optionally together with a prepolymer fraction.

For adjusting the melt flow rate of the polyethylene fraction polymerised in the second gas phase reactor hydrogen may be introduced into the reactor. The hydrogen feed is preferably adjusted to the ethylene feed in order to fulfil a hydrogen to ethylene ratio in the first gas phase reactor of 0 to 25 mol/kmol, more preferably of 5 to 20 mol/kmol.

In the second gas phase reactor preferably an ethylene copolymer fraction is produced. The fluidisation gas stream thus comprises comonomers preferably selected from the group consisting of alpha-olefin conomoners with 3 to 12 carbon atoms, more preferably 4 to 8 carbon atoms. Suitable alpha-olefin comonomer species are 1-butene, 1-hexene and 1-octene. 1-hexene is mostly preferred. The comonomer used in the second gas phase reactor may be the same or different to that used in the first gas phase reactor. The comonomer feed is preferably adjusted to the ethylene feed in order to fulfil a comonomer to ethylene ratio of at least 1 to 15 mol/kmol, more preferably 3 to 10 mol/kmol, most preferably 5 to 8 mol/kmol.

The residence time and the polymerisation temperature in the first gas phase reactor are adjusted as such as to polymerise an ethylene copolymer fraction typically in an amount of 10 to 35 wt%, preferably 15 to 30 wt% and most preferably 18 to 25 wt% of the total polyethylene resin.

As catalyst system any system of catalyst and optionally cocatalyst can be used suitable for polymerising polyethylene resins. Especially suitable are Ziegler-Natta and metallocene catalyst systems. In a preferred embodiment the polymerisation is carried out in the presence of a Ziegler-Natta catalyst.

Preferably, the catalyst is a supported Ziegler-Natta catalyst, more preferably containing a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Examples for suitable support materials are, for instance ES747JR produced and marketed by Ineos Silicas and SP9-491, produced and marketed by Grace.

The magnesium compound is preferably a reaction product of a magnesium dialkyl and an alcohol. The alcohol can be a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to the two alkyl groups, which may be the same or different. Butyl-octyl magnesium is one example of the preferred magnesium dialkyls.

The aluminium compound is preferably a chlorine containing aluminium alkyl. Especially preferred compounds are aluminium alkyl dichlorides and aluminium alkyl sesquischlorides.

The titanium compound is preferably a halogen containing, more preferably clorine containing titanium compound. Especially preferred is titanium tetrachloride.

The catalyst can be prepared by sequentially contacting the carrier with the above mentioned compounds, as described in EP-A-688794. Alternatively, it can be prepared by first preparing a solution from the components and the contacting the solution with a carrier, as described in WO-A-01/55230.

The above mentioned solid catalyst component is contacted with an aluminium alkyl cocatalyst, preferably an aluminium dialkyl halide cocatalyst, which most preferably is an aluminium dialkyl chloride, after which it can be used for polymerization. The contacting of the solid catalyst component and the cocatalyst can either be conducted prior to introducing the catalyst into the polymerization reactor, or it can be conducted by introducing the two components separately into the polymerization reactor.

The catalyst system can be fed to any polymerisation stage but preferably is fed to the first polymerisation stage. Most preferably the catalyst system is only fed to the first polymerisation stage. The catalyst may be transferred into the polymerisation zone by any means known in the art. It is thus possible to suspend the catalyst in a diluent and maintain it as homogeneous slurry. Especially preferred is to use oil having a viscosity from 20 to 1500 mPa*s as diluent, as disclosed in WO-A-2006/063771. It is also possible to mix the catalyst with a viscous mixture of grease and oil and feed the resultant paste into the polymerisation zone. Still further, it is possible to let the catalyst settle and introduce portions of thus obtained catalyst mud into the polymerisation zone in a manner as disclosed, for instance, in EP-A- 428 054.

In one embodiment of the present invention the process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry.

Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes etc., or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C, more preferably from 40 °C to 70 °C.

The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation step. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerization step an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerisation step. However, where the solid catalyst component and the cocatalyst can be fed separately it is possible that only a part of cocatalyst is introduced into the pre-polymerisation stage and the remaining part into the subsequent polymerisation stages. Also in such cases it is necessary to introduce as much cocatalyst into the pre-polymerisation stage as necessary to obtain a sufficient polymerisation reaction.

In a preferred embodiment of the present invention the process does not include a pre-polymerization step.

The polyethylene composition of the invention preferably is produced in a multi-stage process which further comprises a compounding step, wherein the base resin, which is typically obtained as a base resin powder from the reactor, is extruded in an extruder and then pelletized to polymer pellets in a manner known in the art to form the polyolefin composition of the invention.

Optionally, additives or other polymer components can be added to the composition during the compounding step in an amount as described above. Preferably, the composition of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 100 kg/h to 500 kg/h, more preferably 150 kg/h to 300 kg/h.

The screw speed of the extruder is preferably 200 rpm to 500 rpm, more preferably 300 rpm to 450 rpm.

Preferably, in said extrusion step the SEI (specific energy input) of the extruder may be 100 kWh/ton to 400 kWh/ton, more preferably 200 kWh/ton to 300 kWh/ton.

The melt temperature in said extrusion step is preferably 200°C to 300°C, more preferably 230°C to 270°C.

Furthermore, the present invention relates to an article, preferably a pipe, comprising a polyethylene composition as described above or obtainable by a process as described above, and to the use of such a polyethylene composition for the production of an article, preferably a pipe.

A pipe comprising the polyethylene composition according to the present invention surprisingly shows improved slow crack growth resistance in the Notched Pipe Test according to ISO 13479-2009 at a pressure of 11.2 bar and 80 °C. The slow crack growth resistance is determined according to ISO 13479-2009 in terms of the number of hours the notched pipe withstands a certain pressure at a certain temperature before failure.

Preferably, a pipe comprising the polyethylene composition according to the invention has a slow crack growth resistance in the Notched Pipe test at 11.2 bar and 80 °C of equal to or higher than 165 h, more preferably of equal to or higher than 200 h, still more preferably of equal to or higher than 500 h and most preferably of equal to or higher than 750 h. The upper limit of the slow crack growth resistance in the Notched Pipe test at 11.2 bar and 80 °C is usually not more than 10,000 h.

The present invention is further characterized by means of the following examples:

Examples:

1. Definitions

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature 190 °C and a load of 5 kg, the $MFR_2$ of polyethylene at a temperature 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

b) Density

Density of the polymer was measured according to ISO 1183-1:2004 Method A on compression moulded specimen prepared according to EN ISO 1872-2 (Feb 2007) and is given in $kg/m^3$.

c) Comonomer content

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised

7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{[1], [2], [6]} Standard single-pulse excitation was employed utilising the transient NOE at short recycle delays of 3s {[1], [3]} and the RS-HEPT decoupling scheme {[4], [5]}. A total of 1024 (1k) transients were acquired per spectrum. This setup was chosen due its high sensitivity towards low comonomer contents.

Quantitative $^{13}$C{$^{1}$H} NMR spectra were processed, integrated and quantitative properties determined using custom spectral analysis automation programs. All chemical shifts are internally referenced to the bulk methylene signal ($\delta$+) at 30.00 ppm {[9]}.

Characteristic signals corresponding to the incorporation of 1-hexene were observed {[9]} and all contents calculated with respect to all other monomers present in the polymer.

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.84 and 32.23 ppm assigned to the 2s and 2s sites respectively:

$$S = (1/2)*( I_{2S} + I_{3S} )$$

The relative content of ethylene was quantified using the integral of the bulk methylene ($\delta$+) signals at 30.00 ppm:

$$E = (1/2)*I_{\delta+}$$

The total ethylene comonomer content was calculated based the bulk methylene signals and accounting for ethylene units present in other observed comonomer sequences or end-groups:

$$E_{total} = E + (5/2)*B + (3/2)*S$$

The total mole fraction of 1-hexene in the polymer was then calculated as:

$$fH = ( H_{total} / ( E_{total} + H_{total} )$$

The total comonomer incorporation of 1-hexene in mole percent was calculated from the mole fraction in the usual manner:

$$H\ [mol\%] = 100 * fH$$

The total comonomer incorporation of 1-hexene in weight percent was calculated from the mole fraction in the standard manner:

$$H\ [wt\%] = 100 * ( fH * 84.16) / ( (fH * 84.16) + ((1\text{-}fH) * 28.05) )$$

[1] Klimke, K., Parkinson, M., Piel, C., Kaminsky, W., Spiess, H.W., Wilhelm, M., Macromol. Chem. Phys. 2006;207:382.

[2] Parkinson, M., Klimke, K., Spiess, H.W., Wilhelm, M., Macromol. Chem. Phys. 2007;208:2128.

[3] Pollard, M., Klimke, K., Graf, R., Spiess, H.W., Wilhelm, M., Sperber, O., Piel, C., Kaminsky, W., Macromolecules 2004; 37:813.

[4] Filip, X., Tripon, C., Filip, C., J. Mag. Resn. 2005, 176, 239

[5] Griffin, J.M., Tripon, C., Samoson, A., Filip, C., and Brown, S.P., Mag. Res. in Chem. 2007 45, S1, S198

[6] Castignolles, P., Graf, R., Parkinson, M., Wilhelm, M., Gaborieau, M., Polymer 50 (2009) 2373

[7] Zhou, Z., Kuemmerle, R., Qiu, X., Redwine, D., Cong, R., Taha, A., Baugh, D. Winniford, B., J. Mag. Reson. 187 (2007) 225

[8] Busico, V., Carbonniere, P., Cipullo, R., Pellecchia, R., Severn, J., Talarico, G., Macromol. Rapid Commun. 2007, 28, 1128

[9] J. Randall, Macromol. Sci., Rev. Macromol. Chem. Phys. 1989, C29, 201.

d) Rheological parameters

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \tag{1}$$

If the applied strain is within the linear viscoelastic regime, the resulting sinusoidal stress response can be given by

$$\sigma(t) = \sigma_0 \sin(\omega t + \delta) \tag{2}$$

where $\sigma_0$ and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus G', the shear loss modulus, G", the complex shear modulus, G*, the complex shear viscosity, $\eta^*$, the dynamic shear viscosity, $\eta'$, the out-of-phase component of the complex shear viscosity $\eta$" and the loss tangent, tan $\eta$ which can be expressed as follows:

$$G' = \frac{\sigma_0}{\gamma_0} \cos\delta \quad [\text{Pa}] \tag{3}$$

$$G' = \frac{\sigma_0}{\gamma_0} \sin\delta \quad [\text{Pa}] \tag{4}$$

$$G^* = G' + iG'' \text{ [Pa]} \qquad\qquad (5)$$

$$\eta^* = \eta' - i\eta'' \text{ [Pa.s]} \qquad\qquad (6)$$

$$\eta' = \frac{G''}{\omega} \text{ [Pa.s]} \qquad\qquad (7)$$

$$\eta'' = \frac{G'}{\omega} \text{ [Pa.s]} \qquad\qquad (8)$$

The values of storage modulus (G'), loss modulus (G"), complex modulus (G*) and complex viscosity ($\eta^*$) were obtained as a function of frequency ($\omega$). Thereby, e.g. $\eta^*_{300\ rad/s}$ (eta*$_{300\ rad/s}$) is used as abbreviation for the complex viscosity at the frequency of 300 rad/s and $\eta^*_{0.05\ rad/s}$ (eta*$_{0.05\ rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $\tan_{0.05}$ is used as abbreviation for the ratio of the loss modulus (G") and the storage modulus (G') at 0.05 rad/s and $\tan_{300}$ is used as abbreviation for the ratio of the loss modulus (G") and the storage modulus (G') at 300 rad/s.

The elasticity balance $\tan_{0.05}/\tan_{300}$ is defined as the ratio of the loss tangent $\tan_{0.05}$ and the loss tangent $\tan_{300}$.

The polydispersity index, *PI,* is defined by equation 9.

$$PI = \frac{10^5}{G'(\omega_{COP})}, \quad \omega_{COP} = \omega\ for\ (G' = G'') \qquad\qquad (9)$$

where, $\omega_{COP}$ is the cross-over angular frequency, determined as the angular frequency for which the storage modulus, G' equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "-*Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

e) Molecular weight

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum(A_i/M_i)} \qquad\qquad (1)$$

$$M_w = \frac{\sum_{i=1}^{N}(A_i x\, M_i)}{\sum A_i} \qquad (2)$$

$$M_z = \frac{\sum_{i=1}^{N}(A_i x\, M_i^2)}{\sum(A_i/M_i)} \qquad (3)$$

For a constant elution volume interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1 x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 $\mu$L of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at 160°C under continuous gentle shaking in the autosampler of the GPC instrument.

f) Pressure test on notched pipes (NPT)

The slow crack propagation resistance is determined according to ISO 13479-2009 in terms of the number of hours the pipe withstands a certain pressure at a certain temperature before failure. The pressure test is carried out on notched SDR11 pipes having a outer diameter of 110 mm. A pressure of 11.2 bars and a temperature of 80 °C have been used. Notching is made with a climb milling cutter with a 60° included-angle V-cutter conforming to ISO 6108, having a cutting rate of (0.010 $\pm$ 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 $\pm$ 1 mm.

$$h = 0{,}5\left[d_{em} - \sqrt{\left(d_{em}^2 - b_s^2\right)}\right] + 0{,}866\, b_s$$

where

$b_S$     is the width of machined surface of the notch, in millimetres;
$d_{em}$     is the measured mean pipe outside diameter, in millimetres.

2. Examples

a) Inventive Example 1

Preparation of the catalyst

Complex preparation:

87 kg of toluene was added to the reactor. Then 45.5 kg BOMAG-A in heptanes was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

Solid catalyst component preparation:

275 kg silica (ES747JR of Crossfield, having an average particle size of 20 $\mu$m) activated at 600°C in nitrogen was charged into a catalyst preparation reactor. Then, 411 kg 20% EADC (2.0 mmol/g silica) diluted in 555 liters pentane was added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) was added at 23°C during ten minutes. 86 kg pentane was added into the reactor at 22°C during 10 minutes. The slurry was stirred for 8 hours at 50°C. Finally, 52 kg_$TiCl_4$ was added during 0.5 hours at 45°C. The slurry was stirred at 40°C for five hours. The catalyst was then dried by purging with nitrogen.

Multi-stage polymerization

A loop reactor having a volume of 500 $dm^3$ was operated at 95°C and 58 bar pressure. Into the reactor were introduced 84 kg/h of propane diluent, 38 kg/h ethylene and 180 g/h of a gas mixture containing 25 vol-% of hydrogen in nitrogen. In addition, polymerisation catalyst prepared according to the description above was introduced into the reactor at a rate of 12 g/h. The diethylaluminium chloride (DEAC) co-catalyst feed was 16.5 g/h. No additional comonomer was introduced into the reactor. The polymerisation rate was 35.0 kg/h and the conditions in the reactor as shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a first gas phase reactor operated at a temperature of 85°C and a pressure of 20 bar. In addition 11 kg/h ethylene, 0.2 kg/h 1-hexene and 43 g/h hydrogen was introduced into the reactor. The polymerisation rate was 12 kg/h. The conditions are shown in Table 1.

The polymer was withdrawn from the first gas phase reactor and transferred into a flash vessel operated at 3 bar pressure and 70 °C temperature where the hydrocarbons were substantially removed from the polymer. The polymer was then introduced into a second gas phase reactor operated at a temperature of 85°C and a pressure of 20 bar. In addition 26 kg/h ethylene, 0.16 kg/h 1-hexene and 4 g/h hydrogen was introduced into the reactor. The polymerisation rate was 11 kg/h. The conditions are shown in Table 1.

The resulting polymer was purged with nitrogen (about 50 kg/h) for one hour, stabilised with 2200 ppm of Irganox B225 and 1500 ppm Ca-stearate and then extruded to pellets in a counter-rotating twin screw extruder CIM90P (manufactured by Japan Steel Works) so that the throughput was 201 kg/h and the screw speed was 349 rpm.

b) Comparative Example 2

Into a 50 $dm^3$ loop reactor operated at 60 °C temperature and 64 bar pressure as a prepolymerisation reactor were introduced ethylene (2 kg/h), propane diluents (43 kg/h), hydrogen (10 g/h) and as polymerisation catalyst Lynx 200 supplied by BASF (3.7 g/h) and triethylaluminium (TEA) cocatalyst (4.5 g/h). The production rate was 1.9 kg/h.

The slurry from the loop reactor was introduced into the second loop reactor having 500 $dm^3$ volume operated at 95 °C and 57 bar. Into the reactor were introduced 79 kg/h of propane diluent, 42 kg/h ethylene and 141 g/h of a gas mixture containing 25 vol-% of hydrogen in nitrogen. The co-catalyst feed was 3.8 g/h. No additional comonomer was introduced into the reactor. The polymerisation rate was 39.9 kg/h and the conditions in the reactor as shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a first gas phase reactor operated at a temperature of 90°C and a pressure of 20 bar. In addition 15 kg/h ethylene, 0.6 kg/h 1-hexene and 4 g/h hydrogen was introduced into the reactor. The polymerisation rate was 14 kg/h. The conditions are shown in Table 1.

The polymer was withdrawn from the first gas phase reactor and transferred into a flash vessel operated at 3 bar pressure and 70 °C temperature where the hydrocarbons were substantially removed from the polymer. The polymer was then introduced into a second gas phase reactor operated at a temperature of 85°C and a pressure of 20 bar. In addition 32 kg/h ethylene, 1.8 kg/h 1-hexene and 1 g/h hydrogen was introduced into the reactor. The polymerisation rate was 12 kg/h. The conditions are shown in Table 1.

The resulting polymer was purged with nitrogen (about 50 kg/h) for one hour, stabilised with 2200 ppm of Irganox B225 and 1500 ppm Ca-stearate and then extruded to pellets in a counter-rotating twin screw extruder CIM90P (manufactured by Japan Steel Works) so that the throughput was 219 kg/h and the screw speed was 400 rpm.

c) Comparative Example 3

Into a 50 $dm^3$ loop reactor operated at 60 °C temperature and 64 bar pressure as a prepolymerisation reactor were introduced ethylene (2 kg/h), propane diluents (43 kg/h), hydrogen (10 g/h) and as polymerisation catalyst Lynx 200 supplied by BASF (3.4 g/h) and triethylaluminium (TEA) cocatalyst (3.8 g/h). The production rate was 1.9 kg/h.

The slurry from the loop reactor was introduced into the second loop reactor having 500 $dm^3$ volume operated at 95 °C and 57 bar. Into the reactor were introduced 78 kg/h of propane diluent, 42 kg/h ethylene and 144 g/h of a gas mixture containing 25 vol-% of hydrogen in nitrogen. The co-catalyst feed was 3.7 g/h. No additional comonomer was introduced into the reactor. The polymerisation rate was 39.7 kg/h and the conditions in the reactor as shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a first gas phase reactor operated at a temperature of 90°C and a pressure of 20 bar. In addition 15 kg/h ethylene, 0.31 kg/h 1-hexene and 6 g/h hydrogen was introduced into the reactor. The polymerisation rate was 14 kg/h. The conditions are shown in Table 1.

The polymer was withdrawn from the first gas phase reactor and transferred into a flash vessel operated at 3 bar pressure and 70 °C temperature where the hydrocarbons were substantially removed from the polymer. The polymer was then introduced into a second gas phase reactor operated at a temperature of 85°C and a pressure of 20 bar. In addition 31 kg/h ethylene, 0.67 kg/h 1-hexene and 2 g/h hydrogen was introduced into the reactor. The polymerisation rate was 12 kg/h. The conditions are shown in Table 1.

The resulting polymer was purged with nitrogen (about 50 kg/h) for one hour, stabilised with 2200 ppm of Irganox B225 and 1500 ppm Ca-stearate and then extruded to pellets in a counter-rotating twin screw extruder CIM90P (manufactured by Japan Steel Works) so that the throughput was 221 kg/h and the screw speed was 400 rpm.

The properties of the compounded composition are shown in Table 2.

Table 1: Polymerization conditions

| | Inv. Ex 1 | Comp. Ex 2 | Comp. Ex 3 |
|---|---|---|---|
| **Prepolymerizer:** | | | |
| Temperature [°C] | --- | 60 | 60 |
| Pressure [bar] | --- | 64 | 64 |
| $C_2$ feed [kg/h] | --- | 2 | 2 |
| $H_2$ feed [g/h] | --- | 10 | 10 |
| Split [wt%] | --- | 2 | 3 |
| **Loop reactor:** | | | |
| Temperature [°C] | 95 | 95 | 95 |
| Pressure [bar] | 58 | 57 | 57 |
| $H_2/C_2$ [mol/kmol] | 625 | 651 | 664 |
| $C_2$-concentration [mol%] | 5.8 | 3.5 | 3.5 |
| Split [wt%] | 60 | 60 | 58 |
| $MFR_2$ [g/10 min] | 117 | 514 | 456 |
| Density [kg/m$^3$] | 970 | >970 | >970 |
| **1st Gas phase reactor:** | | | |
| Temperature [°C] | 85 | 90 | 90 |
| Pressure [bar] | 20 | 20 | 20 |
| $H_2/C_2$ [mol/kmol] | 336 | 16 | 7 |
| $C_6/C_2$ [mol/kmol] | 8 | 25 | 10 |
| $C_2$-concentration [mol%] | 2.5 | 4.8 | 4.6 |
| Split [wt%] | 21 | 20 | 20 |
| $MFR_5$ [g/10 min] | 40.0 | 19.5 | 9.8 |
| Density [kg/m$^3$] | 963.3 | 963.4 | 963.8 |
| **2nd Gas phase reactor:** | | | |
| Temperature [°C] | 85 | 85 | 85 |
| Pressure [bar] | 20 | 20 | 20 |
| $H_2/C_2$ [mol/kmol] | 16 | 0 | 0 |
| $C_6/C_2$ [mol/kmol] | 6 | 51 | 24 |

(continued)

| 2nd Gas phase reactor: | | | |
|---|---|---|---|
| C$_2$-concentration [mol%] | 4.0 | 11.2 | 11.4 |
| Split [wt%] | 19 | 18 | 19 |
| **Compounding:** | | | |
| Feed [kg/h] | 201 | 219 | 221 |
| Screw Speed [rpm] | 349 | 400 | 400 |
| SEI [kWh/ton] | 215 | 253 | 270 |
| Melt temperature [°C] | 244 | 259 | 269 |

Table 2: Properties of the polyethylene compositions

| | Inv. Ex 1 | Comp. Ex 2 | Comp. Ex 3 |
|---|---|---|---|
| MFR$_5$ [g/10 min] | 0.06 | 0.20 | 0.10 |
| MFR$_{21}$ [g/10 min] | 5.1 | 11.2 | 7.3 |
| FRR$_{21/5}$ | 85.0 | 56.0 | 73.0 |
| Density base resin [kg/m$^3$] | 952.8 | 953.4 | 954.9 |
| PI [Pa$^{-1}$] | 3.9 | 5.7 | 4.9 |
| M$_n$ [g/mol] | 6,761 | 5,723 | 5,959 |
| M$_w$ [g/mol] | 323,000 | 347,000 | 379,000 |
| M$_z$ [g/mol] | 1,922,000 | 3,170,000 | 2,779,000 |
| M$_w$/M$_n$ | 47.8 | 60.6 | 63.5 |
| M$_z$/M$_w$ | 5.95 | 9.14 | 7.33 |
| eta*$_{0.05\ rad/s}$ [kPa·s] | 405 | 268 | 433 |
| eta*$_{300\ rad/s}$ [Pa·s] | 1345 | 988 | 1182 |
| tan$_{0.05}$ | 1.17 | 1.19 | 1.10 |
| tan$_{300}$ | 0.325 | 0.358 | 0.310 |
| tan$_{0.05}$/tan$_{300}$ | 3.60 | 3.33 | 3.55 |
| NPT, 11.2 bar/80 °C [h] (average of two measurements) | 1342 | 14 | 125 |

**Claims**

1. A polyethylene composition comprising a base resin having a density of more than 950 kg/m$^3$ and equal to or less than 965 kg/m$^3$, determined according to ISO 1183-1:2004, and wherein the composition has a melt flow rate MFR$_5$ (190°C, 5 kg) of equal to or less than 0.1 g/10 min, determined according to ISO 1133 and a polydispersity index PI within the range of equal to or higher than 3.0 Pa$^{-1}$ and equal to or less than 4.5 Pa$^{-1}$.

2. The polyethylene composition according to claim 1, wherein the composition has a M$_w$/M$_n$ of equal to or less than 60 and / or a M$_z$/M$_w$ of equal to or less than 7.0.

3. The polyethylene composition according to any of the preceding claims, wherein the composition has a flow rate ratio FRR$_{21/5}$, being the ratio of MFR$_{21}$ to MFR$_5$, of 50 to 100.

4. The polyethylene composition according to any of the preceding claims, wherein the composition has a complex viscosity at 0.05 rad/s eta*$_{0.05\ rad/s}$ of 350 to 450 kPa·s and/or a complex viscosity at 300 rad/s eta*$_{300\ rad/s}$ of 850 to 1500 Pa·s.

5.   The polyethylene composition according to any of the preceding claims, wherein the base resin comprises at least three ethylene homo- or copolymer fractions (A), (B) and (C) being different in their weight average molecular weight $M_w$.

6.   The polyethylene composition according to claim 5, wherein fraction (A) is an ethylene homopolymer and / or fractions (B) and (C) are copolymers of ethylene and at least one alpha-olefin comonomer units with 3 to 12 carbon atoms

7.   The polyethylene composition according to claims 6, wherein fraction (B) has a higher amount of comonomer units as fraction (C).

8.   The polyethylene composition according to claims 5 to 7, wherein the weight ratios of fractions (A) : (B) and (C) is 45 : 55 to 75 : 25 and the weight ratios of fractions (B) : (C) is 40 : 60 to 60 : 40.

9.   A process for the production of a polyethylene composition according to any of the preceding claims, wherein the base resin is produced in a multi-stage process.

10.   The process according to claim 9, wherein the base resin comprises at least three fractions (A), (B) and (C), and these fractions are polymerized at different stages of the multi-stage process in any order.

11.   The process according to any of claims 9 to 10, wherein the base resin is polymerized in the presence of a Ziegler-Natta catalyst comprising a solid catalyst component which is contacted with an aluminium dialkyl halide cocatalyst.

12.   An article comprising the polyethylene composition according to any of claims 1 to 8.

13.   The article according to claim 12 being a pipe.

14.   The pipe according to claim 13 having a slow crack growth resistance in the Notched Pipe Test of at least 165 h, determined according to ISO 13479 at a pressure of 11.2 bar and 80 °C.

15.   Use of a polyethylene composition according to any of claims 1 to 8 for the production of an article.

**Patentansprüche**

1.   Polyethylenzusammensetzung, umfassend ein Basisharz, das eine Dichte von mehr als 950 kg/m³ und von gleich oder weniger als 965 kg/m³ hat, bestimmt gemäß ISO 1183-1:2004, und wobei die Zusammensetzung einen Schmelzflussindex $MFR_5$ (190 °C, 5 kg) von gleich oder weniger als 0,1 g/10 min, bestimmt gemäß ISO 1133, und einen Polydispersitätsindex PI innerhalb des Bereichs von gleich oder höher als 3,0 Pa$^{-1}$ und gleich oder niedriger als 4,5 Pa$^{-1}$ hat.

2.   Polyethylenzusammensetzung nach Anspruch 1, wobei die Zusammensetzung ein $M_w/M_n$ von gleich oder weniger als 60 und/oder ein $M_z/M_w$ von gleich oder weniger als 7,0 hat.

3.   Polyethylenzusammensetzung nach einem der vorhergehenden Ansprüche, wobei zur Zusammensetzung ein Flussindexverhältnis $FRR_{21/5}$, das das Verhältnis des $MFR_{21}$ zum $MFR_5$ ist, von 50 bis 100 hat.

4.   Polyethylenzusammensetzung nach einem der vorhergehenden Ansprüche, wobei die Zusammensetzung eine komplexe Viskosität bei 0,05 rad/s eta*$_{0,05\ rad/s}$ von 350 bis 450 kPa·s und/oder eine komplexe Viskosität bei 300 rad/s eta*$_{300\ rad/s}$ von 850 bis 1500 kPa·s hat.

5.   Polyethylenzusammensetzung nach einem der vorhergehenden Ansprüche, wobei die Basisharzzusammensetzung mindestens drei Ethylenhomo- oder Ethylencopolymerfraktionen (A), (B) und (C) umfasst, die sich in ihrem Gewichtsmittel des Molekulargewichts $M_w$ unterscheiden.

6.   Polyethylenzusammensetzung nach Anspruch 5, wobei die Fraktion (A) ein Ethylenhomopolymer ist und/oder die Fraktionen (B) und (C) Copolymere aus Ethylen und mindestens einer alpha-Olefincomonomereinheit mit 3 bis 12 Kohlenstoffatomen sind.

7. Polyethylenzusammensetzung nach Anspruch 6, wobei die Fraktion (B) eine größere Menge an Comonomereinheiten hat als die Fraktion (C) hat.

8. Polyethylenzusammensetzung nach den Ansprüchen 5 bis 7, wobei das Gewichtsverhältnis der Fraktionen (A) : (B) und (C) 45 : 55 bis 75 : 25 und das Gewichtsverhältnis der Fraktionen (B) : (C) 40 : 60 bis 60 : 40 ist.

9. Verfahren zur Herstellung einer Polyethylenzusammensetzung nach einem der vorhergehenden Ansprüche, wobei das Basisharz in einem mehrstufigen Verfahren hergestellt wird.

10. Verfahren nach Anspruch 9, wobei das Basisharz mindestens drei Fraktionen (A), (B) und (C) umfasst und wobei diese Fraktionen in verschiedenen Stufen des mehrstufigen Verfahrens in irgendeiner Reihenfolge polymerisiert werden.

11. Verfahren nach einem der Ansprüche 9 bis 10, wobei das Basisharz in der Anwesenheit eines Ziegler-Natta-Katalysator polymerisiert wird, der einen festen Katalysatorbestandteil umfasst, der mit einem Aluminiumdialkylhalid-Cokatalysator in Kontakt gebracht wird.

12. Artikel, umfassend die Polyethylenzusammensetzung nach einem der Ansprüche 1 bis 8.

13. Artikel nach Anspruch 12, wobei der Artikel ein Rohr ist.

14. Rohr nach Anspruch 13, das eine Beständigkeit gegenüber langsamem Risswachstum in dem Kerbrohrtest [Engl.: Notched Pipe Test] von mindestens 165 h hat, bestimmt gemäß ISO 13479 bei einem Druck von 11,2 bar und 80 °C.

15. Verwendung einer Polyethylenzusammensetzung nach einem der Ansprüche 1 bis 8 zur Herstellung eines Artikels.

**Revendications**

1. Composition de polyéthylène comprenant une résine de base ayant une densité de plus de 950 kg/m³ et inférieure ou égale à 965 kg/m³, déterminée selon la norme ISO 1183-1:2004, laquelle composition a un indice de fluidité à chaud $MFR_5$ (190 °C, 5 kg) inférieur ou égal à 0,1 g/10 min, déterminé selon la norme ISO 1133 et un indice de polydispersité PI dans la plage allant d'une valeur supérieure ou égale à 3,0 Pa$^{-1}$ à une valeur inférieure ou égale à 4,5 Pa$^{-1}$.

2. Composition de polyéthylène selon la revendication 1, laquelle composition a un rapport $M_w/M_n$ inférieur ou égal à 60 et/ou un rapport $M_z/M_w$ inférieur ou égal à 7,0.

3. Composition de polyéthylène selon l'une quelconque des revendications précédentes, laquelle composition a un rapport d'indices de fluidité $FRR_{21/5}$, étant le rapport de $MFR_{21}$ à $MFR_5$, de 50 à 100.

4. Composition de polyéthylène selon l'une quelconque des revendications précédentes, laquelle composition a une viscosité complexe à 0,05 rad/s êta*$_{0,05\ rad/s}$ de 350 à 450 kPa•s et/ou une viscosité complexe à 300 rad/s êta*$_{300\ rad/s}$ de 850 à 1 500 Pa•s.

5. Composition de polyéthylène selon l'une quelconque des revendications précédentes, dans laquelle la résine de base comprend au moins trois fractions d'homo- ou copolymère d'éthylène (A), (B) et (C) étant différentes en termes de leur poids moléculaire moyen en poids $M_w$.

6. Composition de polyéthylène selon la revendication 5, dans laquelle la fraction (A) est un homopolymère d'éthylène et/ou les fractions (B) et (C) sont des copolymères d'éthylène et d'au moins une unité de comonomère d'alpha-oléfine comportant de 3 à 12 atomes de carbone.

7. Composition de polyéthylène selon les revendications 6, dans laquelle la fraction (B) a une quantité d'unités de comonomère plus élevée que la fraction (C).

**8.** Composition de polyéthylène selon les revendications 5 à 7, dans laquelle les rapports pondéraux des fractions (A)/(B) et (C) sont de 45/55 à 75/25 et les rapports pondéraux des fractions (B)/(C) sont de 40/60 à 60/40.

**9.** Procédé de production d'une composition de polyéthylène selon l'une quelconque des revendications précédentes, dans lequel la résine de base est produite dans un procédé en plusieurs étapes.

**10.** Procédé selon la revendication 9, dans lequel la résine de base comprend au moins trois fractions (A), (B) et (C), et ces fractions sont polymérisées à différents stades du procédé en plusieurs étapes dans n'importe quel ordre.

**11.** Procédé selon l'une quelconque des revendications 9 à 10, dans lequel la résine de base est polymérisée en présence d'un catalyseur de Ziegler-Natta comprenant un composant de catalyseur solide qui est mis en contact avec un cocatalyseur de dialkyl-halogénure d'aluminium.

**12.** Article comprenant la composition de polyéthylène selon l'une quelconque des revendications 1 à 8.

**13.** Article selon la revendication 12 étant un tuyau.

**14.** Tuyau selon la revendication 13 ayant une résistance à la propagation lente de fissures dans l'essai sur tuyau entaillé d'au moins 165 h, déterminée selon la norme ISO 13479 à une pression de 11,2 bar et à 80 °C.

**15.** Utilisation d'une composition de polyéthylène selon l'une quelconque des revendications 1 à 8 pour la production d'un article.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0739937 A
- EP 1920179 A
- US 6770341 B
- EP 1460105 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A

- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- EP 688794 A
- WO 0155230 A
- WO 2006063771 A
- EP 428054 A
- WO 9619503 A
- WO 9632420 A

### Non-patent literature cited in the description

- **SCHEIRS ; BÖHM ; BOOT ; LEEVERS.** PE100 Resins for Pipe Applications. *TRIP,* 1996, vol. 4 (12), 408-415
- **GELDART ; BAYENS.** The Design of Distributors for Gas-fluidised Beds. *Powder Technology,* 1985, vol. 42
- **GELDART.** Gas Fluidisation Technology. J. Wiley & Sons, 1996
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373

- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **J. RANDALL.** *Macromol. Sci., Rev. Macromol. Chem. Phys.,* 1989, vol. C29, 201
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754